# FASCICULE DE BREVET EUROPEEN

(11) **EP 3 365 286 B1**
(45) Date de publication et mention de la délivrance du brevet: **20.03.2024**
(21) Numéro de dépôt: 16794226.7
(22) Date de dépôt: 20.10.2016
(51) Int. Cl.: C02F 3/12, C02F 3/02, C02F 3/20, C02F 11/12

(54) **RÉACTEUR BIOLOGIQUE SÉQUENTIEL ET PROCÉDÉ METTANT EN OEUVRE LE RÉACTEUR**
SEQUENZIELLER BIOLOGISCHER REAKTOR UND VERFAHREN UNTER NUTZUNG DES REAKTORS
SEQUENTIAL BIOLOGICAL REACTOR AND METHOD THAT USES THE REACTOR

(30) Priorité: 20.10.2015 FR 1560010
(43) Date de publication de la demande: 29.08.2018
(73) Titulaire: Cohin Environnement, 92800 Puteaux (FR)
(72) Inventeur: TONELLI, Roger, 95160 Montmorency (FR)
(74) Mandataire: Debay, Damien
(86) Numéro de dépôt international: PCT/EP2016/075301
(87) Numéro de publication internationale: WO 2017/068086

(56) Documents cités:
- EP-A1- 0 052 864
- CN-Y- 2 517 478
- CN-Y- 2 663 407
- FR-A1- 2 774 981
- FR-A1- 2 800 368
- US-A- 4 596 658
- US-A- 5 395 527
- US-A1- 2015 251 110
- US-B1- 6 398 957
- US-B1- 6 884 354

## Description

La présente invention se rapporte au domaine de traitement d'effluents liquides et plus particulièrement à un réacteur biologique séquentiel (SBR ou *Sequential Batch Reactor* en anglais).

Le traitement des effluents liquides est un sujet important dans la protection de l'environnement. Les effluents liquides sont généralement traités dans des stations d'épuration. Il existe plusieurs procédés de traitement mis en oeuvre dans les stations d'épuration. Il existe notamment les procédés de systèmes aérobie de boues activées tels que les procédés SBR. Le procédé SBR a comme particularité que ses étapes se déroulent l'une après l'autre dans un seul bassin. Les procédés SBR apportent en outre plusieurs avantages tels qu'un encombrement moindre, une bonne intégration dans un paysage, des temps de traitement réduits et une diminution du coût de construction d'une station mettant en oeuvre un procédé SBR. Les étapes d'un procédé SBR sont généralement les suivantes : une étape d'admission en effluents liquides, une étape d'aération, une étape de décantation et une étape d'évacuation.

Cependant, bien que le procédé SBR nécessite un seul bassin pour le traitement des effluents liquides, un autre bassin tampon est nécessaire lorsqu'il y a de grands volumes d'effluents liquides à traiter. Souvent, il est en outre indispensable d'avoir en parallèle deux à trois bassins mettant en oeuvre le procédé pour pouvoir traitement assez rapide les grands volumes d'effluents liquides. Il est connu de l'art antérieur, notamment des documents US6884354, US4596658, US2015251110, US5395527, CN 2 517 478 Y et EP0052864, divers réacteurs biologiques séquentiels.

La présente invention se propose de palier un ou plusieurs inconvénients de l'art antérieur et notamment de proposer un réacteur biologique séquentiel et un procédé de mise en oeuvre du réacteur biologique séquentiel permettant avec un seul bassin de traiter en continu de grands volumes d'effluents liquides.

Cet objectif est atteint grâce à un réacteur biologique séquentiel selon la revendication 1.

Selon une autre particularité, le réacteur comprend en outre un moyen de déshydratation des boues évacuées par le moyen d'évacuation, le moyen de déshydratation étant disposé en aval du moyen d'évacuation dans le sens de circulation des boues.

D'autres particularité et avantages sont détaillés dans les revendications dépendantes de réacteur.

L'invention concerne également un procédé selon les revendications 21 à 23.

L'invention, avec ses caractéristiques et avantages, ressortira plus clairement à la lecture de la description faite en référence aux dessins annexés dans lequel :
- La figure 1 représente une coupe du système de siphon à une étape au début du cycle du procédé,
- la figure 2 représente une coupe du système de siphon à une étape suivant l'étape de la figure 1,
- la figure 3 représente une coupe du système de siphon à une étape suivant l'étape de la figure 2,
- la figure 4 représente une coupe du système de siphon à une étape suivant l'étape de la figure 3 selon un mode de réalisation,
- la figure 5 représente une coupe du système de siphon à une étape suivant l'étape de la figure 3 ou de la figure 4,
- la figure 6 représente une coupe du système de siphon à une étape suivant l'étape de la figure 5,

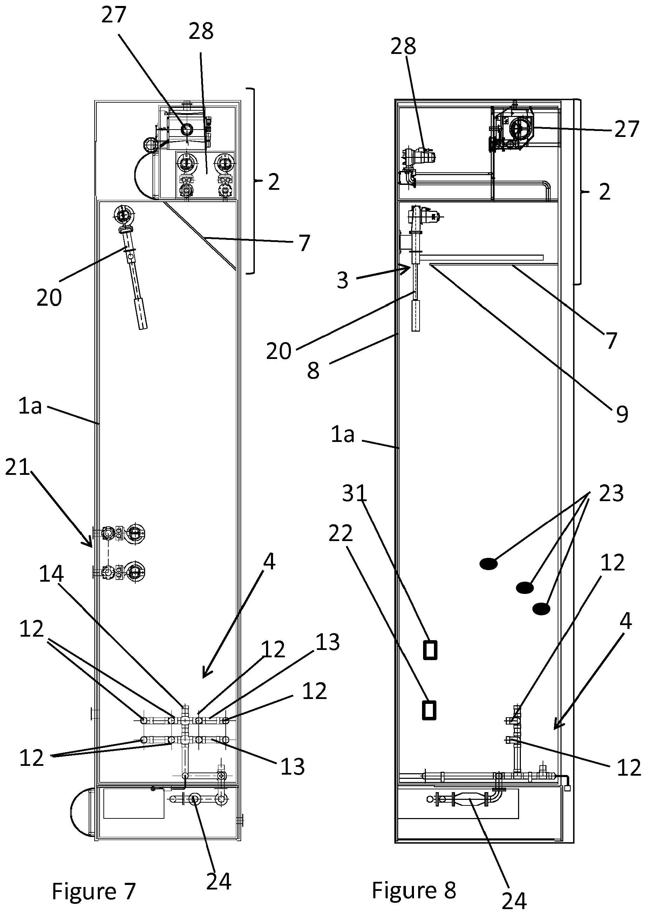

- la figure 7 représente une vue de dessus du premier bassin,
- la figure 8 représente une coupe de profil du premier bassin,

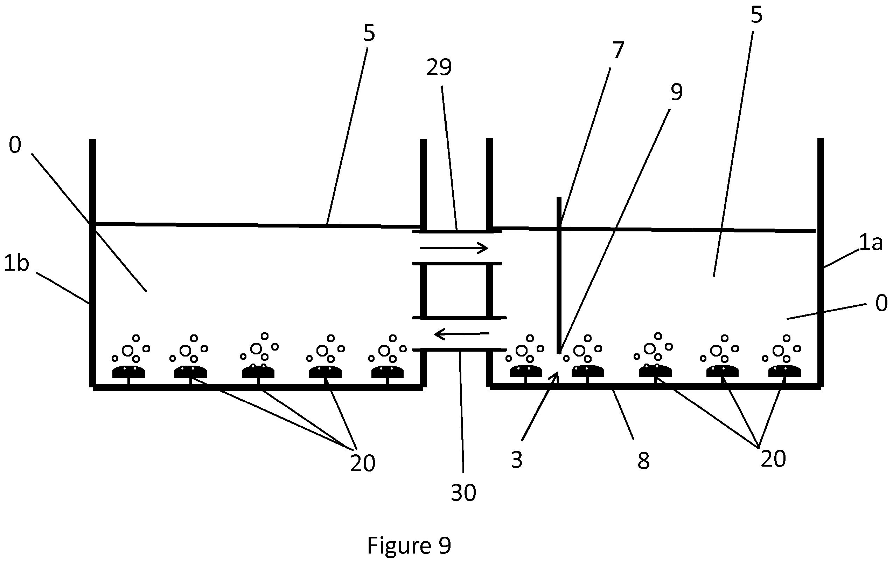

- la figure 9 représente le réacteur selon un mode de réalisation dans lequel il comprend un deuxième bassin.

L'invention va être décrite en référence aux figures précédemment citées.

L'invention concerne un réacteur biologique séquentiel (SBR) pour traiter des effluents (0) liquides contenant des boues (25) après contact avec une masse bactérienne, notamment par sédimentation des boues (ou décantation) et évacuation d'une couche clarifiée.

Dans la suite de la description, le terme « effluents liquides » correspondra aux effluents liquides qui sont admis dans le réacteur. Il peut aussi définir l'ensemble des boues et liquides clarifiés avant que les boues ne soient évacuées et avant que la partie clarifiée des effluents liquides ne soit extraite.

Le SBR comprend un premier bassin (1a) apte à recevoir des effluents (0) liquides à traiter par décantation. Le premier bassin (1a) est un bassin d'aération séquentielle.

Le premier bassin (1a) est dimensionné en fonction de la charge massique et de la vitesse ascensionnelle des effluents (0) liquides dans le bassin. La charge massique est le rapport entre le poids de DBO5 (demande biochimique en oxygène pendant cinq jours) éliminé journellement dans un bassin d'aération et le poids de micro-organismes contenu dans ce bassin.

La vitesse ascensionnelle est par exemple comprise entre 0,25 m/h et 0,5 m/h en fonction de la capacité des boues (25) à sédimenter.

Le volume du premier bassin (1a) est calculé par rapport au niveau moyen de l'effluent (0) liquide dans le bassin : *N*_{moy} = (Nₕ/N_{b})/2 dans lequel *N*_{moy} est le niveau (5) moyen de l'effluent, *N*ₕ est le niveau le plus haut que peut atteindre l'effluent dans le bassin par rapport au fond du bassin, ce niveau étant défini par la position du trop-plein du système de siphon décrit plus bas, *N*_{b} est le niveau le plus bas que peut atteindre l'effluent dans le bassin par rapport au fond du bassin, ce niveau étant défini par la position du niveau seuil bas. Dans la suite du texte, nous nommerons N1, le niveau seuil le plus haut et N0, le niveau seuil le plus bas.

Le choix de vitesse ascensionnelle allant de 0,1 m/h à 1 m/h, de préférence de 0,25 m/h à 0,5 m/h, est lié à la vitesse de sédimentation des boues (25). En effet, une boue ayant une faible capacité de sédimentation va sédimenter à une vitesse de 0,5 m/h à 1 m/H par exemple.

Par exemple, le premier bassin (1a) a une forme rectangulaire. Par exemple, le premier bassin (1a) a un volume utile de 43,8 m³, soit, par exemple une largeur de 2,25 m, une longueur de 9,5 m et une hauteur d'eau de 2,05 m.

Les effluents (0) liquides peuvent être des eaux usées provenant d'usages domestiques, agricoles, industriels, ou des eaux de ruissellement, etc.

Le SBR comprend en outre un moyen (2) d'admission des effluents (0) liquides dans le bassin. Ce moyen (2) d'admission a la particularité d'introduire les effluents (0) liquides en un ou plusieurs points situés à proximité du fond du premier bassin (1a). Le moyen (2) d'admission est, par exemple, une pompe (28) de relevage.

Le fait que les effluents (0) liquides soient introduits en un ou plusieurs points (3) situés à proximité du fond du premier bassin (1a) permet une admission en continu des effluents (0) liquides dans ce premier bassin (1a). Ceci est un avantage par rapport aux SBR de l'art antérieur dans lesquels l'admission est faite en discontinu afin que la décantation des boues (25) dans le bassin ait le temps de se faire.

Le moyen (2) d'admission peut comprend un dispositif de dégrillage (27) pour retenir les matières ou déchets volumineux dans les effluents (0) liquides.

Le SBR comprend également un moyen (4) de captage apte à extraire, à proximité de la surface des effluents (0) liquides, au moins une partie des effluents (6) liquides clarifiés dans une couche clarifiée par la décantation des boues (25). La couche (6) clarifiée par décantation est située immédiatement sous la surface (5) des effluents (0) liquides. Ainsi, le captage de la couche (6) clarifiée est faite au niveau d'une couche sous la surface des effluents (0) liquides. Dans cette couche (6) clarifiée, les boues (25) ayant tendance à tomber au fond du bassin par l'effet de la gravité ne sont plus présentes suite à leur décantation.

Selon un mode de réalisation, le moyen (2) d'admission comprend au moins une paroi (7) siphoïde apte à forcer le passage des effluents (0) liquides entrant dans le premier bassin (1a) entre le fond du premier bassin (1a) et la partie inférieure de la paroi (7) siphoïde.

La paroi (7) siphoïde a pour rôle d'éviter les courts-circuits hydrauliques et d'éviter de perturber la décantation. Cette paroi (7) siphoïde peut être en béton, en inox, en composite ou tout autre matériau apte à l'utilisation de la paroi (7) siphoïde.

La paroi (7) siphoïde délimite donc à l'intérieur du bassin (1a, 1b) du SBR un compartiment tampon qui régule l'entrée des effluents (0) liquides. La section transversale de ce compartiment tampon délimité par la paroi (7) siphoïde peut avoir des formes différentes. La section transversale peut être triangulaire, trapézoïdale ou toute autre forme adaptée à l'utilisation de la paroi (7) siphoïde.

Dans certains modes de réalisation, le SBR prévoit une admission continue d'effluents pour accélérer le traitement. Dans ces modes de réalisation, le volume de ce compartiment tampon délimité par la paroi (7) siphoïde et la section de passage des effluents (0) liquide sous la paroi siphoïde (7) définissent une géométrie qui doit être configurée pour optimiser le traitement des effluents (0) liquide avec leur admission continue dans le bassin. Cette géométrie est conditionnée par le temps de rétention des effluents (0) liquides avant d'entrer dans le premier bassin (1a), par la vitesse d'entrée des effluents (0) liquides au fond du premier bassin (1a) et par la différence entre le niveau seuil maximal (N1) et le niveau seuil minimal (N0) des effluents (0) liquides pouvant être contenus dans le bassin pour que le procédé de mise en oeuvre du SBR soit toujours possible. En effet, ce niveau seuil minimal (N0) correspond à une hauteur à légèrement supérieure au niveau de la partie inférieure des moyens d'extraction (4), en-dessous de laquelle l'extraction de la couche clarifiée est arrêtée pour éviter d'introduire des boues (ou des objets flottants) dans le moyen d'extraction lors de la remontée ultérieure du plan d'eau . Cet arrêt est obtenu par un moyen de contrôle détectant le niveau dans le bassin ou le temps écoulé et contrôlant les moyens d'extraction (4), par exemple via la vanne contrôlant le siphon. De même, le niveau seuil maximal (N1) correspond à la hauteur maximale atteinte par les effluents (0) avant que la phase d'évacuation/extraction soit déclenchée ou au temps au bout duquel l'évacuation/extraction sera déclenchée. Dans certains modes de réalisation, le SBR comporte donc un moyen de contrôle qui régule les divers paramètres du SBR et notamment les niveaux d'effluents ou les temps qui déclenchent l'évacuation/extraction. En effet, la répétition régulière des cycles au cours du temps améliore la décantabilité, c'est-à-dire qu'elle facilite la décantation des effluents (0) liquide pendant les divers cycles. Ainsi, dans certains modes de réalisation, le moyen de contrôle impose un nombre de cycles minimum régulier par période de temps déterminée, en régulant l'admission et l'évacuation.

Le temps de rétention des effluents (0) liquides est contrôlé par le volume du compartiment tampon défini par la paroi (7) siphoïde. Ainsi, le temps de rétention est défini par la hauteur de la paroi (7) siphoïde et par les dimensions du compartiment tampon, ainsi que par les dimensions de la section de passage des effluents (0) liquides sous la paroi (7) siphoïde.

La vitesse d'entrée des effluents (0) liquides au fond du premier bassin (1a) est dépendante de la hauteur de la paroi (7) siphoïde.

Le niveau seuil minimal (N0) des effluents (0) liquides est dépendant de la distance entre le fond du premier bassin (1a) et la partie inférieure de la paroi (7) siphoïde.

Par exemple, la distance entre le fond du premier bassin (1a) et la partie inférieure de la paroi (7) siphoïde est comprise entre 0,1 m et 1,5 m, de préférence entre 0,1 m et 1 m, de préférence 0,5 m.

Par exemple, la géométrie de la paroi (7) siphoïde est réalisée de telle manière que le temps de rétention est supérieure à 30 min et que la vitesse d'entrée des effluents (0) liquides est inférieure à 0,1 m/s.

De préférence, le moyen (2) d'admission est configuré pour introduire les effluents (0) liquides dans le premier bassin (1a) de manière à ce que la vitesse de montée du niveau des effluents (0) liquides dans le premier bassin (1a) soit inférieure à la vitesse de décantation des boues (25) contenues dans les effluents (0) liquides. En effet, la surface de traitement dans le bassin et le débit maximum d'entrée sont de préférence dimensionnés pour que la vitesse ascendante des effluents soit inférieure à celle de la décantation des boues.

Dans certains modes de réalisation, le moyen de contrôle régule donc le débit d'entrée en fonction de la surface de traitement dans le bassin, de préférence en tenant compte des paramètres relatifs à la cloison siphoïde (volume du compartiment tampon, hauteur de la cloison et section de passage).Dans d'autres modes de réalisation la surface du bassin est déterminée en fonction du débit maximum d'entrée pour qu'à aucun moment la vitesse ascendante des effluents ne dépasse celle de décantation des boues. Dans de tels modes de réalisation, les dimensionnements des divers moyens du SBR sont tels qu'il n'est plus nécessaire de contrôler le débit d'entrée par le moyen de contrôle, qui régule alors le SBR en contrôlant les niveaux atteints et/ou les durées des étapes de traitement.

Ainsi, les boues (25) contenues dans les effluents (0) liquides n'atteignent pas les couches proches de la surface des effluents (0) liquides. Le moyen (4) de captage peut alors extraire les effluents (0) liquides dans une couche (6) clarifiée à proximité de la surface (5) des effluents (0) liquides.

Selon un mode de réalisation, le moyen (4) de captage peut extraire les effluents (6) liquides clarifiés simultanément en plusieurs points (10) d'un même plan (11) à proximité de la surface (5) des effluents (0) liquides. Le plan (11) est sensiblement parallèle à la surface (5) des effluents (0) liquides.

Ainsi, le moyen (4) de captage peut extraire de grands volumes de d'eau provenant de la couche (6) clarifiée par la décantation des boues (25) sans perturber le lit (25) de boue formé au fond du premier bassin (1a) par la décantation des boues (25) des effluents (0) liquides.

Selon un mode de réalisation, le moyen (2) d'admission et le moyen (4) de captage sont disposés à des endroits opposés l'un de l'autre dans le premier bassin (1a). Ce mode de réalisation permet que la couche (6) clarifiée des effluents (0) liquides soit moins perturbée par les boues (25) qu'au voisinage du moyen (2) d'admission.

De préférence, le moyen de captage permet une extraction gravitaire des effluents liquides clarifiés. Le moyen (4) de captage comprend un système de siphon agencé pour empêcher l'extraction des effluents (6) liquides clarifiés lorsque la pression d'un gaz dans le système de siphon est supérieure à la pression atmosphérique. Cependant, lorsque la pression du gaz dans le système de siphon est inférieure ou égale à la pression atmosphérique, le système de siphon est agencé pour déclencher l'extraction des effluents (6) liquides clarifiés. Le système de siphon permet ainsi une extraction gravitaire des effluents liquides clarifiés.

Selon un mode de réalisation, le système de siphon comprend au moins une première conduite (12) sensiblement verticale dont une extrémité libre inférieure est apte à extraire les effluents (0) liquides. L'autre extrémité supérieure est connectée à une deuxième conduite (13) sensiblement horizontale. Une extrémité de la deuxième conduite (13) est connectée à un collecteur (14). Le collecteur (14) est connecté à la première jambe (15) descendante d'une troisième conduite (16) en forme de U. L'extrémité libre de la première jambe (15) a une ouverture contrôlée par une vanne (26). La deuxième jambe (17) montante de la troisième conduite (16) en forme de U comprend une quatrième conduite (18) d'évacuation disposée environ à mihauteur de la deuxième jambe (17), tout du moins sous le niveau seuil bas (N0). L'extrémité libre (19) de la deuxième jambe (17) du U comprend une ouverture communiquant avec l'air ambiant pour jouer le rôle de trop-plein. La vanne (26) est, par exemple, une électrovanne.

Dans certains modes de réalisation, comme mentionné plus haut, l'extraction est réalisée en plusieurs points (10). Par exemple, le système de siphon réalise une extraction par une pluralité de premières conduites (12) qui sont éloignées les unes des autres et réparties sur une zone déterminée du bassin, de préférence à l'opposé de l'admission, de sorte à étendre la zone d'extraction grâce à un puisage en plusieurs points, afin de limiter les turbulences générées par l'extraction à chaque point de puisage. De plus, dans certains de ces modes de réalisation, afin d'optimiser l'extraction et d'en limiter les turbulences, l'extraction prévoit une équi-répartition des débits en chaque point (10) d'extraction. Ainsi, dans le cas d'une extraction gravitaire, le diamètre des conduites (12, 13) à un endroit donné est proportionnel à la distance qui sépare cet endroit de la sortie du SBR (le collecteur (14) par exemple), de sorte que le débit soit sensiblement le même d'une point de puisage à l'autre. Par exemple, selon un mode de réalisation, la ou les premières conduites (12) comprennent à l'intérieur de chacune une plaque ou diaphragme placée perpendiculairement à la première conduite (12) et percée d'un trou, par exemple, circulaire. L'aire du trou augmente progressivement entre, d'une part, la première conduite (12) dont la jonction avec la deuxième conduite (13) est la plus proche du collecteur (14) et, d'autre part, la première conduite (12) dont la jonction avec la deuxième conduite (13) est la plus éloignée du collecteur (14).Les diaphragmes sont utilisés pour compenser les pertes de charge induites par l'éloignement des premières conduites par rapport au collecteur (14). De même, par exemple, selon un mode de réalisation, au niveau de la jonction entre la ou les deuxièmes conduites et le collecteur (14), la ou les deuxièmes conduites comprennent à l'intérieur de chacune une plaque ou diaphragme placée perpendiculairement à la deuxième conduite (13) et percée d'un trou, par exemple, circulaire. L'aire du trou augmente progressivement entre, d'une part, la deuxième conduite (13) dont la jonction avec le collecteur (14) est la plus proche de la troisième conduite (16) et, d'autre part, la deuxième conduite (13) dont la jonction avec le collecteur (14) est la plus éloignée de la troisième conduite (16).Les diaphragmes sont utilisés pour compenser les pertes de charge induites par l'éloignement des bras par rapport à la troisième conduite (16) d'évacuation.

Par exemple et de manière non limitative, la structure du siphon est la suivante. Le siphon comprend deux collecteurs (14) horizontaux connectés en vis-à-vis en T à la première jambe (15) descendante de la troisième conduite (16) en forme de U. L'extrémité libre de la première jambe (15) a une ouverture contrôlée par une vanne. La deuxième jambe (17) montante de la troisième conduite (16) en forme de U comprend une quatrième conduite (18) d'évacuation. L'extrémité libre de la deuxième jambe (17) du U comprend une ouverture communiquant avec l'air ambiant. Chaque collecteur (14) est raccordé à plusieurs deuxièmes conduites horizontales ou, autrement appelées, bras. Les bras sont raccordés deux par deux en vis-à-vis au collecteur (14) horizontal. Chaque bras est raccordé à plusieurs premières conduites (12) verticales ou, autrement appelées, buses. Le siphon comprend 2 collecteurs (14), 6 bras par collecteur (14) et 4 buses par bras. Les buses sont espacées entre elles de 0,8 m. Le diamètre intérieur de la troisième conduite (16) est de 250 mm. Le diamètre intérieur des collecteurs (14) est de 200 mm. Le diamètre intérieur des bras est de 100 mm. Pour un débit par buse de 1 L/s, le diamètre des trous circulaires des diaphragmes pour deux bras en vis-à-vis, respectivement, de l'amont vers l'aval est de 91 mm, 72 mm, 61 mm. Le diamètre des trous circulaires des diaphragmes pour chaque buse, respectivement, de l'amont vers l'aval est de 88 mm, 64 mm, 55 mm, 48 mm.

Ce système de siphon permet d'évacuer d'importants volumes d'eau provenant de la couche clarifiée des effluents (0) liquides entre des éléments flottant sur la surface des effluents (0) liquides et le lit (25) de boue déposée au fond du premier bassin (1a) par décantation sans perturber le lit (25) de boue. De plus, aucune partie mobile ou de parties nécessitant une intervention n'est immergée dans les effluents (0) liquides. C'est un système fiable automatisé ne nécessitant qu'une faible maintenance.

Le système de siphon est dimensionné afin d'éviter tout soulèvement du lit (25) de boue lorsqu'il est en fonctionnement avec un lit (25) de boue à 200 mm des buses. Ainsi, le système de siphon est dimensionné de façon non limitative avec une vitesse d'extraction allant de 1,5 m/s à 2 m/s et une charge hydraulique au niveau de ces buses allant de façon non limitative de 5 m³/h/m à 15 m³/h/m.

En fonction de la capacité des boues (25) à décanter, la hauteur de marnage de l'effluent liquide dans le premier bassin (1a) sera adaptée de façon non limitative de 0,5 m à 1 m.

La vanne qui contrôle l'ouverture de la première jambe (15) peut être contrôlée par un moyen de contrôle.

Le moyen de contrôle comprend un processeur et une mémoire. Le moyen de contrôle permet au moins de surveiller le niveau des effluents (0) liquides contenus dans le ou les bassins à partir de signaux représentatifs du niveau des effluents (0) liquides envoyés par le ou les moyens (23) de mesure de niveau des effluents (0) liquides. Le ou les moyens de mesure de niveau sont, par exemple, des capteurs de niveau.

Ce moyen de contrôle peut être connecté à un au moins un capteur de niveau des effluents (0) liquides contenus dans le premier bassin (1a). Ainsi, le moyen de contrôle reçoit des signaux du ou des capteurs (23) de niveau. Selon le niveau détecté par le ou les capteurs (23) de niveau, le moyen de contrôle peut envoyer un signal commandant l'ouverture ou la fermeture de la vanne. La vanne (26) est par exemple une vanne solénoïde ou une électrovanne.

Le SBR comprend en outre des moyens (20) d'aération des effluents (0) liquides pour favoriser une réaction aérobie avec ladite masse bactérienne avant décantation. Les moyens (20) d'aération peuvent faire buller de l'oxygène dans les effluents (0) liquides. Les moyens (20) d'aération permettent de mettre les effluents (0) liquides dans des conditions aérobies.

Par exemple, les moyens (20) d'aération sont un hydroéjecteur, une turbine immergée, un système d'aération fines bulles ou tout autre système permettant l'aération des effluents liquides.

Dans un mode de réalisation, le SBR comporte un conteneur dans lequel sont ménagés au moins le premier bassin (1a), le moyen (2) d'admission et le moyen (4) de captage. Ce conteneur permet le transport du SBR dans des endroits difficiles d'accès avec un seul véhicule sans avoir à emporter plusieurs éléments qui nécessite l'utilisation de plusieurs véhicules.

Afin d'évacuer les boues (25) décantées au fond du premier bassin (1a), le réacteur comprend un moyen (21) d'évacuation de boues (25) déposées par décantation au fond du premier bassin (1a).

Dans un mode de réalisation, au moins un SBR est complété par au moins un deuxième bassin (1b) en communication fluidique avec le premier bassin (1a) pour former un système de réacteurs. Le deuxième bassin (1b) est un bassin d'aération semi-continue. Ce deuxième bassin (1b) est disposé en amont du premier bassin (1a) dans le sens de circulation des effluents (0) liquides.

La communication fluidique peut être réalisée par une canalisation (29). Cette canalisation est, par exemple, dimensionnée afin que le débit entrant sur le deuxième bassin (1b) puisse être transféré au premier bassin (1a) sans que la vitesse de passage de l'effluent en tout point de la tuyauterie ne soit supérieure à 1 m/s.

La communication fluidique est agencée de telle manière que le niveau de liquide dans le premier bassin (1a) est le même que le niveau de liquide dans le deuxième bassin (1b).

En outre, les effluents liquides traités dans le deuxième bassin (1b) entrent dans le premier bassin (1a) par l'intermédiaire de la paroi (7) siphoïde.

L'avantage du deuxième bassin (1b) est la possibilité d'augmenter le temps de contact entre les effluents (0) liquides et l'oxygène, ce qui va accentuer l'oxydation de la matière organique et la nitrification. Il permet aussi de préserver la biomasse des à-coups ou des variations de charge, l'éviter l'exploitation de stations surdimensionnées dont la gestion est difficile et coûteuse, de permettre d'avoir un traitement poussé de l'azote, de fournir de l'oxygène à la demande, et d'éviter le risque de court-circuit hydraulique.

Le deuxième bassin (1b) peut reposer, par exemple, sur le procédé de bioréacteur à lit mobile (*Moving Bed Bio Reactor* (MBBR) en anglais). Ce procédé utilise des bactéries regroupées en un biofilm cultivés sur des supports mobiles, par exemple des supports sphériques, ayant une densité égale ou inférieure à la densité de l'eau.

Le deuxième bassin (1b) comprend un moyens (20) d'aération des effluents (0) liquides afin de faire buller de l'oxygène dans les effluents (0) liquides pour mettre les effluents (0) liquides dans des conditions aérobies. Les moyens (20) d'aération permettent aussi aux supports, sur lesquels sont cultivés les biofilms, d'être en suspension dans les effluents (0) liquides.

Dans le mode de réalisation avec deux bassins, le réacteur peut comprendre un moyen (30) de recirculation des boues (25), par exemple une pompe de recirculation, qui permet le passage d'une partie des boues (25) décantées au fond du premier bassin (1a) dans le deuxième bassin (1b).

Selon un mode de réalisation, le premier bassin (1a) et/ou le deuxième bassin (1b) comprennent en outre au moins un moyen (22) de mesure de l'aération en oxygène du bassin qui mesure la concentration en oxygène dans le bassin. Le moyen (22) de mesure peut être connecté au moyen de contrôle qui est connecté aux moyens (20) d'aération. Ainsi, le moyen de contrôle reçoit des signaux du moyen (22) de mesure de l'aération. Selon la mesure de la concentration en oxygène du ou des bassins (1a, 1b) détectée par le moyen (22) de mesure de l'aération, le moyen de contrôle peut envoyer un signal commandant la mise en route ou l'arrêt des moyens (20) d'aération. Par exemple, une valeur de consigne basse en concentration d'oxygène conditionne le démarrage de l'aération par les moyens (20) d'aération et une valeur de consigne haute en concentration d'oxygène conditionne l'arrêt de l'aération par les moyens (20) d'aération.

Selon un autre mode de réalisation, le premier bassin (1a) et/ou le deuxième bassin (1b) comprennent en outre au moins un moyen de mesure (31) du potentiel redox. Le moyen (31) de mesure peut être connecté au moyen de contrôle qui est connecté aux moyens (20) d'aération. Ainsi, le moyen de contrôle reçoit des signaux du moyen de mesure du potentiel redox. Selon la mesure du potentiel redox du ou des bassins détectée par le moyen (31) de mesure du potentiel redox, le moyen de contrôle peut envoyer un signal commandant la mise en route ou l'arrêt du moyens (20) d'aération. Par exemple, une valeur de consigne basse du potentiel redox conditionne le démarrage de l'aération par les moyens (20) d'aération et une valeur de consigne haute du potentiel redox conditionne l'arrêt de l'aération par les moyens (20) d'aération.

Le moyen (22) de mesure de l'aération en oxygène et le moyen (31) de mesure du potentiel redox peuvent fonctionner ensemble.

La régulation réalisée par le moyen (22) de mesure de l'aération en oxygène et le moyen (31) de mesure du potentiel redox peut être complétée par la mise en place d'une temporisation.

Selon un mode de réalisation, l'aération en oxygène peut être régulée en fonction d'une valeur cible de concentration en oxygène ou d'indicateur redox. Dans ce cas, le moyens (20) d'aération module l'apport d'oxygène dans le ou les bassins afin de ce rapprocher de la valeur cible.

Selon un mode de réalisation, la régulation de l'aération en oxygène peut être réalisée par un contrôle des moyens (20) d'aération par seulement une temporisation d'arrêt des moyens (20) d'aération et une temporisation de fonctionnement des moyens (20) d'aération.

Le premier bassin (1a) et/ou le deuxième bassin (1b) comprennent au moins un moyen (23) de mesure du niveau des effluents (0) liquides dans le premier bassin (1a) et/ou le second bassin envoyant au moyen de contrôle des signaux représentatifs des niveaux des effluents (0) liquides dans le ou les bassins.

Le moyen de contrôle peut envoyer un signal d'ouverture ou de fermeture d'au moins une vanne (26), selon les niveaux mesurés par le ou les moyens (23) de mesure de niveau, pour ouvrir ou fermer la ou les vannes (26) en fonction des niveaux contrôlés.

Dans un mode de réalisation, le SBR comprend en outre un moyen (24) de traitement par ultraviolet disposé en aval du moyen (4) de captage dans le sens de circulation des effluents (0) liquides. Le moyen (24) de traitement permet de traiter les effluents (0) liquides extraits par le moyen (4) de captage. Ce moyen (24) de traitement permet de se mettre conforme aux normes physico-chimiques de rejet en milieu naturel. Toutefois, du fait du rejet des eaux traitées en mer et potentiellement dans des eaux de baignade, il peut être nécessaire d'abattre la concentration en microorganisme.

Par exemple, le moyen (24) de traitement par ultraviolet utilise des lampes à amalgame à haute intensité et basse pression émettant, par exemple, à une longueur d'onde optimale de 253,7 nm pour avoir un bon rendement énergétique.

La structure compacte du SBR réduit au minimum l'encombrement et la perte de charge tout en faisant en sorte que les opérations de maintenance, comme par exemple les remplacements de lampes, puissent s'effectuer rapidement et sans danger.

Le SBR comprend en outre un moyen de déshydratation des boues (25) évacuées par le moyen (21) d'évacuation. Le moyen de déshydratation est disposé en aval du moyen (21) d'évacuation dans le sens de circulation des boues (25).

Le moyen de déshydratation est par exemple des lits de séchage. Généralement, la technique des lits de séchage se pratique à l'air libre sur des boues (25) liquides. Elle combine l'évaporation naturelle et le drainage de l'eau libre à travers une couche filtrante de sable et de graviers.

Les lits de séchage peuvent comprendre d'une couche de sable disposée sur une couche support de gravillons. Des drains peuvent être disposés dans la couche support de gravillons. Les drains peuvent ainsi recueillir les eaux d'égouttage. Les eaux d'égouttage peuvent être ramenées en tête du SBR à l'aide d'un poste toutes eaux pour y être retraitées.

De façon non limitative, la couche de boue étendue sur les lits est de 30 cm.

Dans une configuration, le moyen de déshydratation comprend 4 lits, pour une surface totale de 36 m² avec une largeur de lit de 2 m et une longueur de 4,5 m pour produire 5,25 t/an de matière sèche.

Le procédé de mise en oeuvre du SBR comprend au moins les étapes suivantes :
- introduction à proximité du fond du premier bassin (1a) des effluents (0) liquides contenant des boues (25) par des moyens d'admission,
- aération des effluents (0) liquides par des moyens (20) d'aération,
- décantation des boues (25) contenues dans le bassin,
- extraction par des moyens de captage, à proximité de la surface des effluents liquides, d'au moins une partie des effluents liquides clarifiés dans une couche clarifiée par la décantation des boues,
- évacuation des boues (25) du premier bassin (1a) par des moyens d'évacuation des boues (25).

L'étape d'introduction est mise en oeuvre en continu pendant la mise en oeuvre des étapes d'aération, de décantation et d'évacuation. Les étapes d'aération, de décantation et d'évacuation se répètent de façon cyclique.

Le procédé fonctionne en continu. Le procédé est dimensionné de façon à conserver une marge de manoeuvre importante concernant la capacité d'aération pour répondre à d'éventuels pics de pollution. Ceci permet d'éviter les nuisances olfactives et de diminuer considérablement la production de boues (25) en ménageant des temps de respiration endogène.

Chaque cycle de fonctionnement comprend plusieurs phases. La gestion des différents moyens utilisés est faite par le moyen de contrôle.

Nous décrivons d'abord un mode de réalisation avec le premier bassin (1a) d'aération séquentielle.

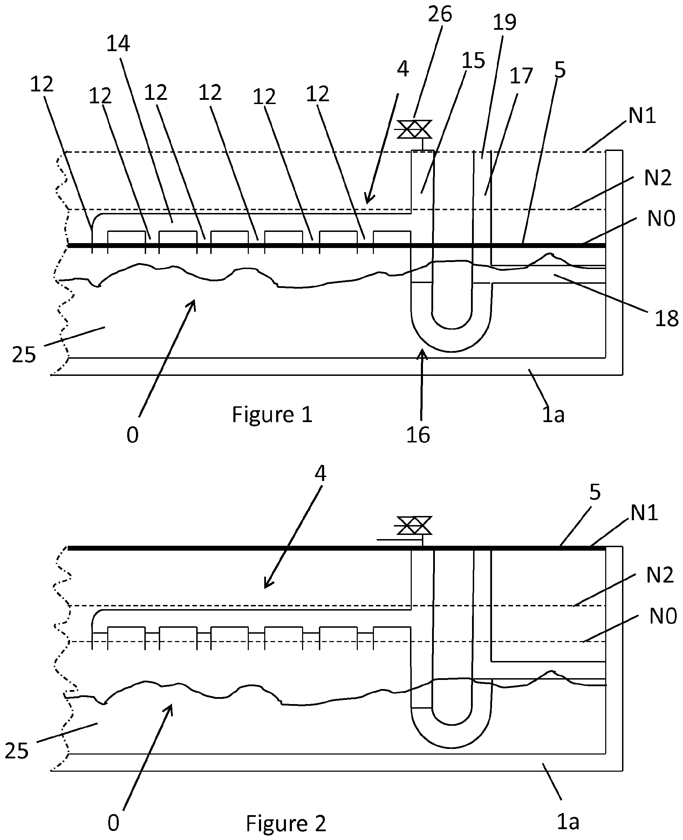

À la fin d'un cycle (Figure 1), le niveau dans le premier bassin (1a) est au niveau de seuil bas (N0).

Les nouveaux effluents (0) liquides sont introduits à proximité du fond du premier bassin (1a) par le moyen (2) d'admission comprenant au moins une pompe (28) d'alimentation. Le moyen (4) de captage et le moyen (21) d'évacuation des boues (25) sont à l'arrêt.

Les moyens (20) d'aération se mettent alors en route pour aérer les effluents (0) liquides. Pendant cette étape d'aération, plusieurs réactions se produisent. Il se produit une réaction d'anabolisme dans laquelle la pollution organique est transformée en biomasse en présence de microorganismes d'une masse bactérienne. Il se produit une réaction de respiration endogène dans laquelle la biomasse est minéralisée en dioxyde de carbone, en ammoniac et en eau. Il se produit également une réaction de nitrification pour produire du NH₄⁺, puis du NO₂⁻ puis du NO₃⁻ à partir des composés azotés contenus dans les effluents liquides.

De façon non limitative, l'aération peut être réalisée de manière continue ou séquencée pendant toute cette étape d'aération.

Du fait de l'admission des effluents liquides à traiter, le niveau monte entre le niveau de seuil bas (N0) et un niveau de seuil haut (N1) à partir duquel la phase de décantation est déclenchée. Pendant l'étape de décantation, qui peut durer par exemple, 1h :
Le moyen (2) d'admission continue à introduire les nouveaux effluents (0) liquides.

Le moyen (4) de captage est à l'arrêt.

Les moyens (20) d'aération qui ont fonctionné jusqu'à ce que le niveau de seuil haut (N1) déclenchant la phase de décantation soit atteint (Figure 2) sont alors arrêtés.

Le moyen (21) d'évacuation des boues (25) est à l'arrêt.

L'aération étant arrêtée, les effluents (0) liquides et la masse bactérienne contenues dans le premier bassin (1a) sont dans des conditions anaérobies et il se produit une réaction de dénitrification des effluents (0) liquides pour produire du NO₃⁻ puis du N₂ à l'état gazeux.

La décantation permet de laisser les boues (25) tomber au fond du premier bassin (1a) sous l'effet de la gravité.

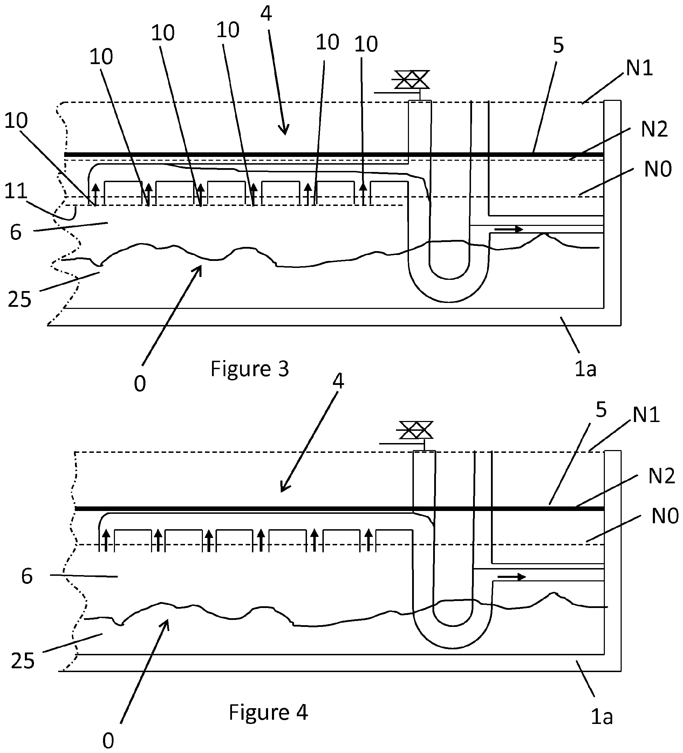

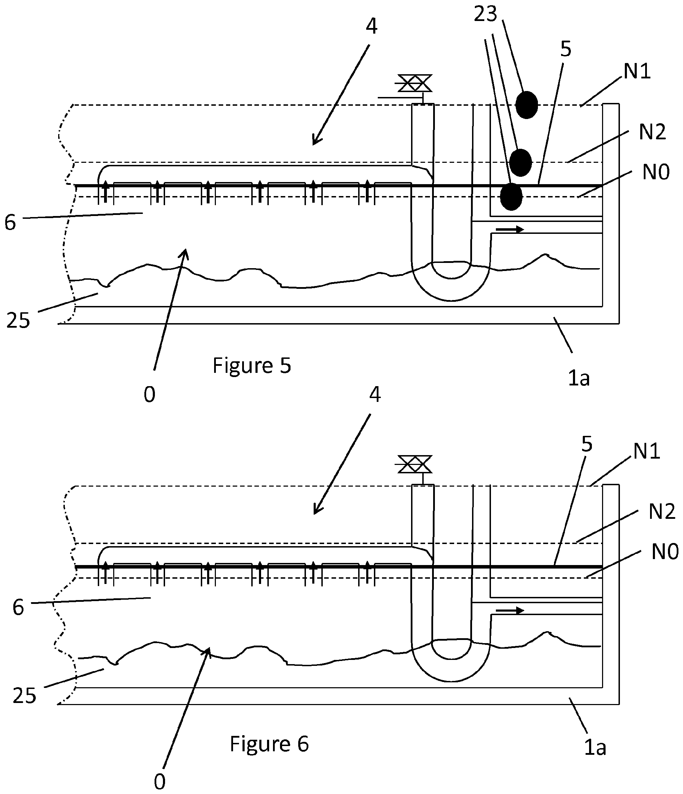

Au bout d'une certaine durée de temporisation programmable à partir du moyen de contrôle, l'étape de décantation est écoulée et l'étape d'évacuation peut démarrer :
Le moyen (2) d'admission continue à introduire les nouveaux effluents (0) liquides. Le moyen (4) de captage est alors amorcé. Par exemple, l'amorce du moyen (4) de captage est réalisée par l'ouverture de la vanne contrôlant l'extrémité libre de la première jambe (15) de la troisième conduite (16) en forme de U. Ceci a pour conséquence que le niveau des effluents (0) liquides commence à baisser (Figure 3, 4, 5, 6). Les moyens (20) d'aération sont toujours à l'arrêt. Le moyen (21) d'évacuation des boues (25) est mis en route pour une durée de temporisation programmée dans le moyen de contrôle pour enclencher l'étape d'évacuation des boues (25) du premier bassin (1a) par les moyens d'évacuation des boues (25). La durée de temporisation peut être comprise entre 4 min et 10 min selon la taille du moyen (4) de captage.

Selon un mode de réalisation, le moyen de contrôle comprend un module de sécurité permettant une fermeture automatique de la vanne (26) lorsque le niveau des effluents (0) liquides atteint un seuil de sécurité (N2) lorsque le niveau des effluents (0) liquides baisse, même si la durée de la temporisation n'est pas terminée (Figure 4). Ceci permet de ne pas avoir de désamorçage du moyen (4) de captage même pour des faibles débits. Ce niveau est détecté par le capteur de niveau du dispositif. Le seuil de sécurité est inférieur au niveau de seuil haut (N1).

Une fois le niveau de seuil bas (N0) est atteint par les effluents (0) liquides, le cycle reprend depuis le début (Figure 1).

Nous décrivons d'abord un mode de réalisation avec le premier bassin (1a) d'aération séquentielle et le deuxième bassin (1b) d'aération semi-continue.

Avant le commencement d'un cycle, les boues (25) traitées sont rejetées et le niveau des effluents (0) liquides baisse dans le premier bassin (1a) et le deuxième bassin (1b), qui sont en communication fluidique, jusqu'à ce qu'ils atteignent un niveau de niveau de seuil bas (N0).

De nouveaux effluents (0) liquides par le moyen (2) d'admission comprenant par exemple au moins une pompe (28) d'alimentation sont introduits dans le deuxième bassin (1b) et simultanément, par communication fluidique, le même volume du deuxième bassin (1b) sont introduits gravitairement à proximité du fond du premier bassin (1a) par le moyen (2) d'admission comprenant une paroi siphoïde. Le moyen (4) de captage et le moyen (21) d'évacuation des boues (25) sont à l'arrêt. Le moyen (30) de recirculation démarre. Les moyens (20) d'aération du deuxième bassin (1b) sont à l'arrêt ou en fonctionnement selon l'évolution du mode de régulation qui dépend de la quantité et de la qualité d'effluents (0) liquides à traiter.

Les moyens (20) d'aération du premier bassin (1a) se mettent alors en route pour aérer les effluents (0) liquides du premier bassin (1a). Pendant cette étape d'aération, plusieurs réactions se produisent. Il se produit une réaction d'anabolisme dans laquelle la pollution organique est transformée en biomasse en présence de microorganisme d'une biomasse bactérienne. Il se produit une réaction de respiration endogène dans laquelle la biomasse est minéralisée en dioxyde de carbone, en ammoniac et en eau. Il se produit également une réaction de nitrification pour produire du NO₂⁻ et du NO₃⁻ à partir des composés azotés contenus dans les effluents liquides. Les mêmes réactions se produisent dans le deuxième bassin (1b) lorsque les moyens (20) d'aération du deuxième bassin (1b) sont en marche.

De façon non limitative, l'aération peut être réalisée de manière continue ou séquencée pendant toute cette étape d'aération.

Du fait de l'admission d'effluents liquides à traiter, le niveau dans les bassins monte entre le niveau de seuil bas (N0) et un niveau de seuil haut (N1) à partir duquel la phase de décantation est déclenchée.

Pendant l'étape de décantation, qui peut durer par exemple, 1h :Le moyen (2) d'admission continue à introduire les nouveaux effluents (0) liquides.

Le moyen (4) de captage est à l'arrêt.

Les moyens (20) d'aération du premier bassin (1a) qui ont fonctionné jusqu'à ce que le niveau de seuil haut (N1) déclenchant la phase de décantation soit atteint (Figure 2) sont alors arrêtés.

Le moyen (21) d'évacuation des boues (25) est à l'arrêt.

Le moyen (30) de recirculation continue à fonctionner.

Les moyens (20) d'aération du deuxième bassin (1b) sont à l'arrêt ou en fonctionnement selon l'évolution du mode de régulation.

L'aération étant arrêtée les effluents (0) liquides et la masse bactérienne contenues dans le premier bassin (1a) sont dans des conditions anaérobieset il se produit une réaction de dénitrification des effluents (0) liquides pour produire du NO₃⁻ et du N₂ à l'état gazeux.

La décantation permet de laisser les boues (25) tomber au fond du premier bassin (1a) sous l'effet de la gravité.

Au bout d'une certaine durée de temporisation programmable à partir du moyen de contrôle, l'étape de décantation est écoulée et l'étape d'évacuation peut démarrer :
Le moyen (2) d'admission continue à introduire les nouveaux effluents (0) liquides dans le premier bassin (1a). Le moyen (4) de captage est alors amorcé. Par exemple, l'amorce du moyen (4) de captage est réalisée par l'ouverture de la vanne contrôlant l'extrémité libre de la première jambe (15) de la troisième conduite (16) en forme de U. Ceci a pour conséquence que le niveau des effluents (0) liquides commence à baisser. Les moyens (20) d'aération sont toujours à l'arrêt. Le moyen (21) d'évacuation des boues (25) est mis en route pour une durée de temporisation programmée dans le moyen de contrôle pour enclencher l'étape d'évacuation des boues (25) du premier bassin (1a) par les moyens d'évacuation des boues (25). La durée de temporisation peut être comprise entre 4 min et 10 min selon la taille du moyen (4) de captage.

Le moyen (30) de recirculation est toujours à l'arrêt. Les moyens (20) d'aération du deuxième bassin (1b) sont à l'arrêt ou en fonctionnement selon l'évolution du mode de régulation.

Une fois le niveau de seuil bas (N0) est atteint par les effluents (0) liquides, le cycle reprend depuis le début.

La recirculation des boues (25) permet de maintenir une concentration de biomasse équivalente dans le deuxième bassin (1b) et le premier bassin (1a). Avec des débits de pointe, le temps d'aération peut parfois représenter seulement 1/3 de la durée globale du cycle. Or, la recirculation des boues (25) n'a lieu que lors de la phase d'aération. Par conséquent, la capacité maximale des pompes de recirculation de l'effluent est équivalente à, par exemple, 3 fois le débit max entrant : *Q*_{rcc} = 3 × *Q*ₐₗᵢₘ où *Q*_{rcc} est le débit de recirculation entre le deuxième bassin (1b) et le premier bassin (1a) et *Q*ₐₗᵢₘ est le débit maximum entrant dans le réacteur.

Selon un mode de réalisation, le moyen de contrôle peut comprendre un module de sécurité permettant une fermeture automatique de la vanne lorsque le niveau des effluents (0) liquides atteint un niveau de seuil de sécurité (N2) lorsque le niveau des effluents (0) liquides baisse, même si la durée de la temporisation n'est pas terminée. Ceci permet de ne pas avoir de désamorçage du moyen (4) de captage même pour des faibles débits. Ce niveau est détecté par le capteur de niveau du dispositif. Le seuil de sécurité est inférieur au niveau de seuil haut (N1).

En ce qui concerne le système de siphon, la taille du siphon est en relation directe avec le volume d'effluents (0) liquides à traiter par cycle.

La hauteur de marnage h est liée au volume d'effluents à traiter par la formule : *V* = *S* × *h* où V est le volume d'effluents (0) liquides à traiter, S est la surface du ou des bassins et h la hauteur de marnage entre le seuil haut (N1) et le seuil bas (N0).

Dans un réacteur comprenant un premier bassin (1a), seule la surface du premier bassin (1a) est prise en compte.

Dans un réacteur comprenant un premier et un deuxième bassin (1b), la surface des deux bassins est prise en compte.

En fonctionnement, quand le niveau des effluents (0) liquides dans le bassin augmente du niveau de seuil bas (N0) jusqu'au niveau de seuil haut (N1) durant la phase d'aération du cycle, l'air emprisonné dans les bras (13) horizontaux, les buses (12) d'extraction est comprimé et le niveau d'eau dans les buses (12) verticales s'élèvent. Lorsque le niveau des effluents (0) liquides augmente, la pression relative affichée par un capteur de pression est supérieur 0 mbar.

En même temps, le gaz emprisonné pousse le niveau des effluents (0) liquides vers le bas dans la première jambe (15) descendante du siphon. Le gaz emprisonné est pressurisé par la différence de hauteur de la colonne d'eau dans les 2 jambes (15, 17) de la conduite (16) en U. Cette augmentation de pression permet d'augmenter le niveau de l'eau bien au dessus des collecteurs (14) des tuyaux d'extraction pendant que le niveau de l'eau dans les buses d'extraction n'augmente que très peu.

L'eau ne peut pas s'échapper du bassin tant que l'air emprisonné entre l'effluent du bassin et le bouchon d'eau traitée n'est pas relâché dans l'atmosphère en ouvrant les vannes (26) pour une courte durée.

L'ouverture des vannes (26) commandée par la fin de la temporisation T1 est responsable de la période de rejet à la fin de la période de sédimentation. À ce stade la pression relative affichée par le transmetteur de pression chute pour atteindre 0 mbar. Cette période de rejet est divisée en 2 parties :
- Un rejet se faisant par la force de gravité s'exerçant sur le liquide quand le niveau des effluents (0) liquides dans le premier bassin (1a) est supérieur au niveau des bras horizontaux.
- Un rejet se faisant par siphonage lorsque le niveau des effluents (0) liquides se situe en dessous du niveau des bras (13) horizontaux d'extraction et au dessus du seuil bas (N0) dans le premier bassin (1a).

Le passage de l'étape de rejet gravitaire au rejet par siphonage s'opère par la fermeture des vannes (26). Cette fermeture des vannes se fait soit par la fin de la temporisation T2, soit par l'atteinte d'un niveau seuil (N2).

En fin de période de rejet, les vannes (26) sont ouvertes pour une certaine durée afin de permettre au gaz d'être aspiré jusqu'à ce que celui-ci occupe l'ensemble de l'espace dans le siphon à l'exception du bouchon d'eau traitée dans la conduite (16) en U et d'une certaine hauteur, par exemple 70 mm, de la partie inférieure des buses (12) d'extraction. La pression relative affichée par le capteur de pression est égale à 0 mbar.

## Revendications

1. Réacteur biologique séquentiel pour traiter par décantation des effluents (0) liquides contenant des boues (25), comprenant au moins :
- un premier bassin (1a) apte à recevoir des effluents (0) liquides à traiter par contact de ces derniers avec une masse bactérienne,
- un moyen (2) d'admission des effluents (0) liquides dans le premier bassin (1a), apte à introduire les effluents (0) liquides en un ou plusieurs points (3) au fond du premier bassin (1a),
- un moyen (4) de captage comprenant un système de siphon, apte à extraire, à la surface (5) des effluents (0) liquides, au moins une partie des effluents liquides clarifiés dans une couche (6) clarifiée par la décantation des boues (25),
le réacteur étant **caractérisé en ce que**
- le dit moyen (4) de captage comporte une pluralité de conduites (12, 13) réparties sur une zone déterminée du bassin, de sorte à réaliser une extraction en plusieurs points (10) puisage,
- le diamètre des conduites (12, 13) à un endroit donné est proportionnel à la distance qui sépare cet endroit de la sortie du SBR, de sorte à permettre une équi-répartition des débits en chaque point (10) de puisage.

2. Réacteur selon la revendication 1, **caractérisé en ce que** le moyen (2) d'admission comprend au moins une paroi (7) siphoïde apte à forcer le passage des effluents (0) liquides entrant dans le premier bassin (1a) entre le fond (8) du premier bassin (1a) et la partie (9) inférieure de la paroi (7) siphoïde.

3. Réacteur selon la revendication 2, **caractérisé en ce que** la distance entre le fond (8) du premier bassin (1a) et la partie (9) inférieure de la paroi (7) siphoïde est comprise entre 0,1 m et 1 m, de préférence 0,5 m.

4. Réacteur selon au moins une des revendications 1 à 3, **caractérisé en ce que** le moyen (2) d'admission est apte à introduire les effluents (0) liquides dans le premier bassin (1a) de manière à ce que la vitesse de montée du niveau des effluents (0) liquides dans le premier bassin (1a) est inférieure à la vitesse de décantation des boues (25) contenues dans les effluents (0) liquides.

5. Réacteur selon la revendication 1, **caractérisé en ce que** lesdites conduites (12, 13) dudit moyen (4) de captage le rende apte à extraire les effluents (6) liquides clarifiés simultanément en plusieurs points (10) d'un même plan (11) à proximité de la surface (5) des effluents (0) liquides, le plan (11) étant sensiblement parallèle à la surface (5) des effluents (0) liquides.

6. Réacteur selon au moins une des revendications 1 à 5, **caractérisé en ce que** le moyen (2) d'admission et le moyen (4) de captage sont disposés à des endroits opposés l'un de l'autre dans le premier bassin (1a).

7. Réacteur selon au moins une des revendications 1 à 6, **caractérisé en ce que** le moyen (4) de captage comprenant le système de siphon est apte à empêcher l'extraction des effluents (0) liquides clarifiés lorsque la pression d'un gaz dans le système de siphon est supérieure à la pression atmosphérique, le système de siphon étant apte à déclencher l'extraction des effluents (0) liquides clarifiés lorsque la pression du gaz dans le système de siphon est inférieure ou égale à la pression atmosphérique.

8. Réacteur selon au moins une des revendications 1 à 7, **caractérisé en ce que** lesdites conduites (12, 13) dudit moyen (4) de captage comprend au moins une première conduite (12) sensiblement verticale dont une extrémité libre inférieure est apte à extraire les effluents (0) liquides, l'autre extrémité supérieure étant connectée à une deuxième conduite (13) sensiblement horizontale, une extrémité de la deuxième conduite (13) étant connectée à un collecteur (14), le collecteur (14) étant connecté à la première jambe (15) descendante d'une troisième conduite (16) en forme de U, l'extrémité libre de la première jambe (15) ayant une ouverture contrôlée par une vanne (26), la deuxième jambe (17) montante de la troisième conduite (16) en forme de U comprenant une quatrième conduite (18) d'évacuation, l'extrémité libre de la deuxième jambe (17) du U comprenant une ouverture communiquant avec l'air ambiant.

9. Réacteur selon la revendication 8, **caractérisé en ce que** la ou les premières conduites (12) comprennent à l'intérieur de chacune une plaque placée perpendiculairement à la première conduite (12) et percée d'un trou, l'aire du trou augmentant progressivement entre, d'une part, la première conduite (12) dont la jonction avec la deuxième conduite (13) est la plus proche du collecteur (14) et, d'autre part, la première conduite (12) dont la jonction avec la deuxième conduite (13) est la plus éloignée du collecteur (14).

10. Réacteur selon la revendication 8, **caractérisé en ce que**, au niveau de la jonction entre la ou les deuxièmes conduites et le collecteur (14), la ou les deuxièmes conduites comprennent à l'intérieur de chacune une plaque placée perpendiculairement à la deuxième conduite (13) et percée d'un trou, l'aire du trou augmentant progressivement entre, d'une part, la deuxième conduite (13) dont la jonction avec le collecteur (14) est la plus proche de la troisième conduite (16) et, d'autre part, la deuxième conduite (13) dont la jonction avec le collecteur (14) est la plus éloignée de la troisième conduite (16).

11. Réacteur selon au moins une des revendications 1 à 10, **caractérisé en ce que** le réacteur comprend des moyens (20) d'aération des effluents (0) liquides pour favoriser une réaction aérobie avec ladite masse bactérienne avant décantation, les moyens (20) d'aération étant aptes à faire buller de l'oxygène dans les effluents (0) liquides.

12. Réacteur selon au moins une des revendications 1 à 11, **caractérisé en ce que** le réacteur est apte à être intégré dans un conteneur dans lequel sont ménagés au moins le premier bassin (1a), le moyen (2) d'admission et le moyen (4) de captage.

13. Réacteur selon au moins une des revendications 1 à 12, **caractérisé en ce que** le réacteur comprend en outre un moyen (21) d'évacuation de boues (25) déposées par décantation au fond du premier bassin (1a).

14. Réacteurs selon au moins une des revendications 1 à 13, **caractérisé en ce qu'**il comprend un deuxième bassin (1b) en communication fluidique avec le premier bassin (1a) de telle manière que le niveau des effluents liquides dans le premier bassin (1a) soit le même que le niveau des effluents liquides dans le deuxième bassin (1b), le deuxième bassin (1b) étant en amont du premier bassin (1a) dans le sens de circulation des effluents (0) liquides, le deuxième bassin (1b) comprenant un moyens (20) d'aération des effluents (0) liquides apte à faire buller de l'oxygène dans les effluents (0) liquides.

15. Réacteur selon au moins une des revendications 1 à 14, **caractérisé en ce que** le premier bassin (1a) et/ou le deuxième bassin (1b) comprend en outre au moins un moyen de mesure de concentration en oxygène et/ou un moyen de mesure du potentiel redox.

16. Réacteur selon au moins une des revendications 1 à 15, **caractérisé en ce que** le premier bassin (1a) et/ou le deuxième bassin (1b) comprennent au moins un moyen de mesure du niveau des effluents (0) liquides dans le premier bassin (1a) et/ou le second bassin.

17. Réacteur selon au moins une des revendications 1 à 16, **caractérisé en ce que** le réacteur comprend un moyen de contrôle, le moyen de contrôle comprenant un processeur et une mémoire, le moyen de contrôle étant apte à surveiller le niveau des effluents (0) liquides contenus dans le ou les bassins à partir de signaux représentatifs du niveau des effluents (0) liquides envoyés par le ou les moyens de mesure de niveau des effluents (0) liquides, le moyen de contrôle étant apte à envoyer un signal d'ouverture ou de fermeture d'au moins une vanne, selon les niveaux mesurés par le ou les moyens de mesure de niveau, pour ouvrir ou fermer la ou les vannes en fonction des niveaux contrôlés.

18. Réacteur selon au moins une des revendications 1 à 17, **caractérisé en ce que** le moyen de contrôle étant apte à envoyer un signal de démarrage ou d'arrêt du ou des moyens (20) d'aération des effluents (0) liquides selon l'aération en oxygène mesurée par le ou les moyens de mesure de l'aération en oxygène.

19. Réacteur selon au moins une des revendications 1 à 18, **caractérisé en ce que** le réacteur comprend en outre un moyen de traitement par ultraviolet disposé en aval du moyen (4) de captage dans le sens de circulation des effluents (0) liquides, le moyen de traitement étant apte à traiter les effluents (0) liquides extraits par le moyen (4) de captage.

20. Réacteur selon au moins une des revendications 1 à 19, **caractérisé en ce que** le réacteur comprend en outre un moyen de déshydratation des boues (25) évacuées par le moyen (21) d'évacuation, le moyen de déshydratation étant disposé en aval du moyen (21) d'évacuation dans le sens de circulation des boues (25).

21. Procédé de mise en oeuvre d'un réacteur biologique séquentiel selon la revendication 1, comprenant au moins les étapes suivantes :
- introduction à proximité du fond du premier bassin (1a) des effluents (0) liquides contenant des boues (25) par des moyens d'admission,
- aération des effluents (0) liquides par des moyens (20) d'aération,
- décantation des boues (25) contenues dans le bassin,
- évacuation des boues (25) du premier bassin (1a) par des moyens d'évacuation des boues (25),
**caractérisé en ce qu'**il comprend une étape d'extraction des effluents (0) liquides clarifiés par un moyen (4) de captage comprenant un système de siphon apte à extraire, à la surface (5) des effluents (0) liquides, au moins une partie des effluents liquides clarifiés dans une couche clarifiée par la décantation des boues, le moyen (4) de captage comportant une pluralité de conduites (12, 13) réparties sur une zone déterminée du bassin, le diamètre des conduites (12, 13) à un endroit donné étant proportionnel à la distance qui sépare cet endroit de la sortie du SBR, de sorte à permettre une équi-répartition des débits en chaque point (10) de puisage,
cette étape d'extraction étant mise en oeuvre de manière tandis que l'introduction est mise en oeuvre en continu.

22. Procédé selon la revendication 21, **caractérisé en ce que** l'introduction est mise en oeuvre en continu pendant la mise en oeuvre des étapes d'aération, de décantation et d'évacuation, les étapes d'aération, de décantation et d'évacuation se répétant de façon cyclique.

23. Procédé selon la revendication 21, **caractérisé en ce que** les étapes se répètent sans interruption pendant l'étape de décantation.

## Patentansprüche

1. Sequenzieller biologischer Reaktor zur Behandlung von flüssigen Abwässern (0), die Schlamm (25) enthalten, durch Absetzen, umfassend mindestens:
- ein erstes Becken (1a), das geeignet ist, flüssige Abwässer (0) aufzunehmen, die durch Kontakt von letzteren mit einer Bakterienmasse behandelt werden sollen,
- ein Mittel (2) zum Einlassen der flüssigen Abwässer (0) in das erste Becken (1a), das geeignet ist, die flüssigen Abwässer (0) an einer oder mehrere Stellen (3) am Boden des ersten Beckens (1a) einzuleiten,
- ein Mittel (4) zum Auffangen, das ein Siphonsystem umfasst, das geeignet ist, an der Oberfläche (5) der flüssigen Abwässer (0) mindestens einen Teil der geklärten flüssigen Abwässer in einer durch die Absetzung des Schlamms (25) geklärten Schicht (6) zu extrahieren,
wobei der Reaktor **dadurch gekennzeichnet ist, dass**
- das Mittel (4) zum Auffangen eine Vielzahl von Leitungen (12, 13) umfasst, die über einen bestimmten Bereich des Beckens verteilt sind, so dass eine Extraktion an mehreren Entnahmestellen (10) durchgeführt wird,
- der Durchmesser der Leitungen (12, 13) an einem gegebenen Ort proportional zum Abstand ist, der diesen Ort von dem Auslass des SBR trennt, so dass eine gleichmäßige Verteilung der Durchflussmengen an jeder Entnahmestelle (10) ermöglicht wird.

2. Reaktor nach Anspruch 1, **dadurch gekennzeichnet, dass** das Einlassmittel (2) mindestens eine siphonförmige Wand (7) umfasst, die geeignet ist, den Durchgang der flüssigen Abwässer (0), die in das erste Becken (1a) eintreten, zwischen dem Boden (8) des ersten Beckens (1a) und dem unteren Teil (9) der siphonförmigen Wand (7) zu erzwingen.

3. Reaktor nach Anspruch 2, **dadurch gekennzeichnet, dass** der Abstand zwischen dem Boden (8) des ersten Beckens (1a) und dem unteren Teil (9) der siphonförmigen Wand (7) zwischen 0,1 m und 1 m, vorzugsweise 0,5 m, beträgt.

4. Reaktor nach mindestens einem der Ansprüche 1 bis 3,
**dadurch gekennzeichnet, dass** das Einlassmittel (2) geeignet ist, die flüssigen Abwässer (0) in das erste Becken (1a) einzuleiten, so dass die Steiggeschwindigkeit des Pegels der flüssigen Abwässer (0) im ersten Becken (1a) geringer ist als die Absetzgeschwindigkeit des in den flüssigen Abwässern (0) enthaltenen Schlamms (25).

5. Reaktor nach Anspruch 1, **dadurch gekennzeichnet, dass** die Leitungen (12, 13) des Auffangmittels (4) es dazu geeignet machen, die geklärten flüssigen Abwässer (6) gleichzeitig an mehreren Stellen (10) einer gleichen Ebene (11) in der Nähe der Oberfläche (5) der flüssigen Abwässer (0) zu extrahieren, wobei die Ebene (11) im Wesentlichen parallel zur Oberfläche (5) der flüssigen Abwässer (0) ist.

6. Reaktor nach mindestens einem der Ansprüche 1 bis 5,
**dadurch gekennzeichnet, dass** das Einlassmittel (2) und das Auffangmittel (4) an aneinander gegenüberliegenden Orten in dem ersten Becken (1a) angeordnet sind.

7. Reaktor nach mindestens einem der Ansprüche 1 bis 6,
**dadurch gekennzeichnet, dass** das Auffangmittel (4), welches das Siphonsystem umfasst, dazu geeignet ist, die Extraktion der geklärten flüssigen Abwässer (0) zu verhindern, wenn der Druck eines Gases in dem Siphonsystem höher als der Atmosphärendruck ist, wobei das Siphonsystem dazu geeignet ist, die Extraktion der geklärten flüssigen Abwässer (0) zu veranlassen, wenn der Druck des Gases in dem Siphonsystem niedriger als oder gleich dem Atmosphärendruck ist.

8. Reaktor nach mindestens einem der Ansprüche 1 bis 7,
**dadurch gekennzeichnet, dass** die Leitungen (12, 13) des Auffangmittels (4) mindestens eine erste, im Wesentlichen vertikale Leitung (12) umfassen, von der ein unteres freies Ende geeignet ist, die flüssigen Abwässer (0) zu extrahieren, wobei das andere obere Ende mit einer zweiten, im Wesentlichen horizontalen Leitung (13) verbunden ist, wobei ein Ende der zweiten Leitung (13) mit einem Sammler (14) verbunden ist, wobei der Sammler (14) mit dem ersten absteigenden Schenkel (15) einer dritten U-förmigen Leitung (16) verbunden ist, wobei das freie Ende des ersten Schenkels (15) eine Öffnung aufweist, die durch ein Ventil (26) gesteuert wird, wobei der zweite steigende Schenkel (17) der dritten U-förmigen Leitung (16) eine vierte Abführleitung (18) umfasst, wobei das freie Ende des zweiten Schenkels (17) des U eine Öffnung umfasst, die mit der Umgebungsluft in Verbindung steht.

9. Reaktor nach Anspruch 8, **dadurch gekennzeichnet, dass** die erste(n) Leitung(en) (12) im Inneren jeweils eine Platte umfassen, die senkrecht zur ersten Leitung (12) platziert und mit einem Loch versehen ist, wobei die Fläche des Lochs zwischen einerseits der ersten Leitung (12), deren Kreuzung mit der zweiten Leitung (13) am nächsten zum Sammler (14) liegt, und andererseits der ersten Leitung (12), deren Kreuzung mit der zweiten Leitung (13) am weitesten vom Sammler (14) entfernt liegt, allmählich zunimmt.

10. Reaktor nach Anspruch 8, **dadurch gekennzeichnet, dass** auf Höhe der Kreuzung zwischen der oder den zweiten Leitung(en) und dem Sammler (14) die zweite(n) Leitung(en) im Inneren jeweils eine Platte umfassen, die senkrecht zur zweiten Leitung (13) platziert und mit einem Loch versehen ist, wobei die Fläche des Lochs zwischen einerseits der zweiten Leitung (13), deren Kreuzung mit dem Sammler (14) am nächsten zur dritten Leitung (16) liegt, und andererseits der zweiten Leitung (13), deren Kreuzung mit dem Sammler (14) am weitesten von der dritten Leitung (16) entfernt liegt, allmählich zunimmt.

11. Reaktor nach mindestens einem der Ansprüche 1 bis 10,
**dadurch gekennzeichnet, dass** der Reaktor Mittel (20) zur Belüftung der flüssigen Abwässer (0) umfasst, um eine aerobe Reaktion mit der Bakterienmasse vor dem Absetzen zu fördern, wobei die Mittel (20) zur Belüftung geeignet sind, um Sauerstoff in die flüssigen Abwässer (0) einzublasen.

12. Reaktor nach mindestens einem der Ansprüche 1 bis 11,
**dadurch gekennzeichnet, dass** der Reaktor geeignet ist, in einen Behälter integriert zu werden, in dem mindestens das erste Becken (1a), das Einlassmittel (2) und das Auffangmittel (4) angebracht sind.

13. Reaktor nach mindestens einem der Ansprüche 1 bis 12,
**dadurch gekennzeichnet, dass** der Reaktor ferner ein Mittel (21) zum Abführen von Schlamm (25) umfasst, der durch Absetzen am Boden des ersten Beckens (1a) abgelagert wird.

14. Reaktor nach mindestens einem der Ansprüche 1 bis 13,
**dadurch gekennzeichnet, dass** er ein zweites Becken (1b) umfasst, das in Fluidverbindung mit dem ersten Becken (1a) steht, so dass der Pegel der flüssigen Abwässer im ersten Becken (1a) derselbe ist wie der Pegel der flüssigen Abwässer im zweiten Becken (1b), wobei das zweite Becken (1b) in Strömungsrichtung der flüssigen Abwässer (0) stromaufwärts des ersten Beckens (1a) liegt, wobei das zweite Becken (1b) ein Mittel (20) zur Belüftung der flüssigen Abwässer (0) umfasst, das geeignet ist, Sauerstoff in die flüssigen Abwässer (0) einzublasen.

15. Reaktor nach mindestens einem der Ansprüche 1 bis 14,
**dadurch gekennzeichnet, dass** das erste Becken (1a) und/oder das zweite Becken (1b) ferner mindestens ein Mittel zur Messung einer Sauerstoffkonzentration und/oder ein Mittel zur Messung des Redoxpotentials umfasst.

16. Reaktor nach mindestens einem der Ansprüche 1 bis 15,
**dadurch gekennzeichnet, dass** das erste Becken (1a) und/oder das zweite Becken (1b) mindestens ein Mittel zur Messung des Pegels der flüssigen Abwässer (0) im ersten Becken (1a) und/oder im zweiten Becken umfassen.

17. Reaktor nach mindestens einem der Ansprüche 1 bis 16,
**dadurch gekennzeichnet, dass** der Reaktor ein Steuerungsmittel umfasst, wobei das Steuerungsmittel einen Prozessor und einen Speicher umfasst, wobei das Steuerungsmittel geeignet ist, den Pegel der in dem/den Becken enthaltenen flüssigen Abwässer (0) anhand von Signalen zu überwachen, die den Pegel der flüssigen Abwässer (0) darstellen und durch das oder die Mittel zur Messung des Pegels der flüssigen Abwässer (0) gesendet werden, wobei das Steuerungsmittel geeignet ist, ein Signal zum Öffnen oder Schließen mindestens eines Ventils zu senden, je nach den durch das oder die Mittel zur Messung des Pegels gemessenen Pegeln, um die Ventile in Abhängigkeit von den überwachten Pegeln zu öffnen oder zu schließen.

18. Reaktor nach mindestens einem der Ansprüche 1 bis 17,
**dadurch gekennzeichnet, dass** das Steuerungsmittel geeignet ist, ein Signal zum Starten oder Stoppen des oder der Mittel (20) zur Belüftung der flüssigen Abwässer (0) zu senden, je nach der Sauerstoffbelüftung, die durch das oder die Mittel zur Messung der Sauerstoffbelüftung gemessen wird.

19. Reaktor nach mindestens einem der Ansprüche 1 bis 18,
**dadurch gekennzeichnet, dass** der Reaktor ferner ein Ultraviolett-Behandlungsmittel umfasst, das in der Strömungsrichtung der flüssigen Abwässer (0) stromabwärts des Auffangmittels (4) angeordnet ist, wobei das Behandlungsmittel geeignet ist, die flüssigen Abwässer (0) zu behandeln, die durch das Auffangmittel (4) extrahiert werden.

20. Reaktor nach mindestens einem der Ansprüche 1 bis 19,
**dadurch gekennzeichnet, dass** der Reaktor ferner ein Mittel zur Entwässerung des Schlamms (25) umfasst, der durch das Abführmittel (21) abgeführt wird, wobei das Entwässerungsmittel in der Strömungsrichtung des Schlamms (25) stromabwärts des Abführmittels (21) angeordnet ist.

21. Verfahren zum Ausführen eines sequenziellen biologischen Reaktors nach Anspruch 1, das mindestens die folgenden Schritte umfasst:
- Einleiten der flüssigen Abwässer (0), die Schlamm (25) enthalten, durch Einlassmittel in die Nähe des Bodens des ersten Beckens (1a),
- Belüften der flüssigen Abwässer (0) durch Belüftungsmittel (20),
- Absetzen des Schlamms (25), der in dem Becken enthalten ist,
- Abführen des Schlamms (25) aus dem ersten Becken (1a) durch Abführmittel des Schlamms (25),
**dadurch gekennzeichnet, dass** es einen Schritt des Extrahierens der geklärten flüssigen Abwässer (0) durch ein Auffangmittel (4) umfasst, das ein Siphonsystem umfasst, das geeignet ist, an der Oberfläche (5) der flüssigen Abwässer (0) mindestens einen Teil der geklärten flüssigen Abwässer in einer durch die Absetzung des Schlamms geklärten Schicht zu extrahieren, wobei das Auffangmittel (4) eine Vielzahl von Leitungen (12, 13) umfasst, die über einen bestimmten Bereich des Beckens verteilt sind, wobei der Durchmesser der Leitungen (12, 13) an einem gegebenen Ort proportional zum Abstand ist, der diesen Ort vom Auslass des SBR trennt, so dass eine gleichmäßige Verteilung der Durchflussmengen an jeder Entnahmestelle (10) ermöglicht wird,
wobei dieser Extraktionsschritt ausgeführt wird, während die Einleitung kontinuierlich ausgeführt wird.

22. Verfahren nach Anspruch 21, **dadurch gekennzeichnet, dass** die Einleitung während der Ausführung des Belüftungs-, des Absetzungs- und des Abführungsschritts kontinuierlich durchgeführt wird, wobei sich der Belüftungs-, der Absetzungs- und der Abführungsschritt zyklisch wiederholen.

23. Verfahren nach Anspruch 21, **dadurch gekennzeichnet, dass** die Schritte während des Absetzungsschritts ohne Unterbrechung wiederholt werden.

## Claims

1. A sequencing batch reactor for treating, by settling, liquid effluent (0), containing sludge (25), comprising at least:
- a first basin (1a) able to receive liquid effluent (0) to be treated by contact thereof with a bacterial mass,
- inlet means (2) for liquid effluent (0) to enter the first basin (1a), able to introduce the liquid effluent (0) at one or several points (3) at the bottom of the first basin (1a),
- a collection means (4) comprising a siphon system, able to extract from the surface (5) of liquid effluent (0), at least a portion of the clarified liquid effluent in a clarified layer (6) by sedimentation of the sludge (25),
the reactor being **characterized in that**
- said collection means (4) comprises a plurality of pipes (12, 13) distributed over a determined zone of the basin, so as to perform an extraction at several withdrawal points (10),
- the diameter of the pipes (12, 13) at a given location is proportional to the distance separating this location from the outlet of the SBR, so as to allow an equal distribution of flow rates at each withdrawal point (10).

2. The reactor according to claim 1, **characterized in that** the inlet means (2) comprises at least one siphon-like wall (7) able to force the passage of liquid effluent (0) entering the first basin (1a) between the bottom (8) of the first basin (1a) and the lower part (9) of the siphon-like wall (7).

3. The reactor according to claim 2, **characterized in that** the distance between the bottom (8) of the first basin (1a) and the lower part (9) of the siphon-like wall (7) is between 0.1 m and 1 m, preferably 0.5 m.

4. The reactor according to at least one of claims 1 to 3,
**characterized in that** the inlets means (2) is able to introduce the liquid effluent (0) into the first basin (1a) so that the rise rate of the level of liquid effluent (0) in the first basin (1a) is lower than the settling rate of the sludge (25) contained in the liquid effluent (0).

5. The reactor according to claim 1, **characterized in that** said pipes (12, 13) of said collection means (4) render it able to extract the clarified liquid effluent (6) simultaneously at several points (10) along a same plane (11) near the surface (5) of the liquid effluent (0), the plane (11) being substantially parallel to the surface (5) of the liquid effluent (0).

6. The reactor according to at least one of claims 1 to 5,
**characterized in that** the inlet means (2) and the collection means (4) are arranged at opposite locations from each other in the first basin (1a).

7. The reactor according to at least one of claims 1 to 6,
**characterized in that** the collection means (4) comprising the siphon system is able to prevent the extraction of clarified liquid effluent (0) when the pressure of a gas in the siphon system is greater than the atmospheric pressure, the siphon system being able to trigger the extraction of the clarified liquid effluent (0) when the pressure of the gas in the siphon system is less than or equal to the atmospheric pressure.

8. The reactor according to at least one of claims 1 to 7,
**characterized in that** said pipes (12, 13) of said collection means (4) comprise at least a first substantially vertical pipe (12), a lower free end of which is able to extract the liquid effluent (0), the other upper end being connected to a second substantially horizontal pipe (13), one end of the second pipe (13) being connected to a collector (14), the collector (14) being connected to the first descending leg (15) of a third U-shaped pipe (16), the free end of the first leg (15) having an opening controlled by a valve (26), the second upward leg (17) of the third U-shaped pipe (16) comprising a fourth discharge pipe (18), the free end of the second U-shaped leg (17) comprising an opening communicating with the ambient air.

9. The reactor according to claim 8, **characterized in that** the first pipe(s) (12) comprise, within each, a plate placed perpendicularly to the first pipe (12) and pierced by a hole, the area of the hole gradually increasing between, on the one hand, the first pipe (12) whose junction with the second pipe (13) is closest to the collector (14) and, on the other hand, the first pipe (12) whose junction with the second pipe (13) is furthest from the collector (14).

10. The reactor according to claim 8, **characterized in that,** at the junction between the second pipe(s) and the collector (14), the second pipe(s) comprise(s), within each, a plate placed perpendicularly to the second pipe (13) and pierced by a hole, the area of the hole gradually increasing between, on the one hand, the second pipe (13), whose junction with the collector (14) is closest to the third pipe (16) and, on the other hand, the second pipe (13) whose junction with the collector (14) is furthest from the third pipe (16).

11. The reactor according to at least one of claims 1 to 10,
**characterized in that** the reactor comprises means (20) for aerating liquid effluent (0) in order to promote an aerobic reaction with said bacterial mass before settlement, the aeration means (20) being able to bubble the oxygen in the liquid effluent (0).

12. The reactor according to at least one of claims 1 to 11,
**characterized in that** the reactor is able to be integrated into a container wherein at least the first basin (1a), the inlet means (2) and the collection means (4) are arranged.

13. The reactor according to at least one of claims 1 to 12,
**characterized in that** the reactor further comprises a means (21) for discharging sludge (25) deposited by sedimentation at the bottom of the first basin (1a).

14. The reactor according to at least one of claims 1 to 13, **characterized in that** it comprises a second basin (1b) in fluid communication with the first basin (1a) in such a way that the level of the liquid effluent in the first basin (1a) is the same as the level of the liquid effluent in the second basin (1b), the second basin (1b) being upstream from the first basin (1a) in the direction of circulation of the liquid effluent (0), the second basin (1b) comprising a means (20) for aerating the liquid effluent (0) capable of bubbling the oxygen in the liquid effluent (0).

15. The reactor according to at least one of claims 1 to 14,
**characterized in that** the first basin (1a) and/or the second basin (1b) further comprise(s) at least one means for measuring the oxygen concentration and/or a means for measuring the redox potential.

16. The reactor according to at least one of claims 1 to 15,
**characterized in that** the first basin (1a) and/or the second basin (1b) comprise(s) at least one means for measuring the level of liquid effluent (0) in the first basin (1a) and/or the second basin.

17. The reactor according to at least one of claims 1 to 16,
**characterized in that** the reactor comprises a control means, the control means comprising a processor and a memory, the control means being able to monitor the level of liquid effluent (0) contained in the basin(s) from signals representative of the level of liquid effluent (0) sent by the means for measuring the level of liquid effluent (0), the control means being able to send a signal for opening or closing at least one valve, according to the levels measured by the level measuring means, in order to open or close the valve(s) on the basis of the levels checked.

18. The reactor according to at least one of claims 1 to 17,
**characterized in that** the control means are able to send a starting or stopping signal to the means (20) for aerating the liquid effluent (0) based on the oxygen aeration measured by the oxygen aeration measuring means.

19. The reactor according to at least one of claims 1 to 18,
**characterized in that** the reactor further comprises ultraviolet treatment means arranged downstream of the collection means (4) in the direction of circulation of the liquid effluent (0), the treatment means being able to treat the liquid effluent (0) extracted by the collection means (4).

20. The reactor according to at least one of claims 1 to 19,
**characterized in that** the reactor further comprises a means for dehydrating the sludge (25) discharged by the discharge means (21), the dehydrating means being arranged downstream of the discharge means (21) in the direction of circulation of the sludge (25).

21. A method for operating a sequential batch reactor according to claim 1, comprising at least the following steps:
- introducing, near the bottom of the first basin (1a), liquid effluent (0) containing sludge (25) by inlet means,
- aerating the liquid effluent (0) by aeration means (20),
- settling the sludge (25) contained in the basin,
- discharging the sludge (25) from the first basin (1a) by sludge discharge means (25),
**characterized in that** it comprises a step of extracting the clarified liquid effluent (0) by a collection means (4) comprising a siphon system capable of extracting, at the surface (5) of the liquid effluent (0), at least a portion of the clarified liquid effluent in a clarified layer by sludge settling, the collection means (4) comprising a plurality of pipes (12, 13) distributed over a determined zone of the basin, the diameter of the pipes (12, 13) at a given location being proportional to the distance which separates this location from the outlet of the SBR, so as to allow equal distribution of the flow rates at each withdrawal point (10),
this extraction step being implemented in such a way that the introduction is carried out continuously.

22. The method according to claim 21, **characterized in that** the introduction is carried out continuously during the implementation of the aeration, settling and discharge steps, the aeration, settling and discharge steps being cyclically repeated.

23. The method according to claim 21, **characterized in that** the steps are repeated without interruption during the settling step.
